Europäisches Patentamt

European Patent Office

Office européen des brevets

(11) Veröffentlichungsnummer : **0 097 278**
**B1**

(12) **EUROPÄISCHE PATENTSCHRIFT**

(19)

(45) Veröffentlichungstag der Patentschrift :
07.05.86

(21) Anmeldenummer : 83105562.9

(22) Anmeldetag : 07.06.83

(51) Int. Cl.⁴ : **B 62 D  7/02**

(54) **Fahrzeug mit zwei lenkbaren Rädern.**

(30) Priorität : 22.06.82 DE 3223196

(43) Veröffentlichungstag der Anmeldung :
04.01.84 Patentblatt 84/01

(45) Bekanntmachung des Hinweises auf die Patenterteilung : 07.05.86 Patentblatt 86/19

(84) Benannte Vertragsstaaten :
**AT BE CH FR GB IT LI NL SE**

(56) Entgegenhaltungen :
**DE-A- 2 504 506**
**DE-U- 7 515 665**
**FR-A- 1 197 816**
**US-A- 2 848 247**
**US-A- 2 982 564**

(73) Patentinhaber : **Ernst Wagner KG**
**Postfach 132 St. Peter-Strasse 5**
**D-7410 Reutlingen 1 (DE)**

(72) Erfinder : **Schumacher, Karl**
**Schleifmühleweg 101**
**D-7400 Tübingen (DE)**

(74) Vertreter : **Schmid, Berthold et al**
**Patentanwälte Dipl.-Ing. B. Schmid Dr. Ing. G. Birn**
**Dipl.-Phys. H. Quarder Falbenhennenstrasse 17**
**D-7000 Stuttgart 1 (DE)**

## Beschreibung

Die Erfindung bezieht sich auf ein Fahrzeug mit einer nicht lenkbaren Achse sowie zwei symmetrisch zur Fahrzeug-Längsachse angeordneten, in einem Lagerbock od. dgl. gelagerten lenkbaren Rädern, denen je ein um eine vertikale Achse, deren gedachte Verlängerung sich durch die Radmitte erstreckt, drehbares, mit dem zugeordneten Lagerbock verbundenes Zahnrad zugeordnet ist, wobei sich zwischen den beiden Zahnrädern ein außermittig an einer Schwinge um eine vertikale Achse gelagertes, mit beiden Zahnrädern in Eingriff stehendes Ritzel befindet und sich die Längsachse der um eine andere vertikale Achse drehbaren Schwinge bei Geradeausstellung der lenkbaren Räder in Geradeausrichtung erstreckt, wobei auch der Ritzelmittelpunkt auf dieser Längsachse oder einer gedachten Verlängerung davon liegt, während die Drehachse des Ritzels an der Schwinge in einer gedachten vertikalen Verbindungsebene durch die beiden geometrischen Radachsen gelegen ist, wobei außerdem mindestens eines der Zahnräder mit einem Lenkantriebselement, insbesondere einem Lenkantriebsritzel, in Antriebsverbindung steht. Ein Fahrzeug dieser Art ist durch die US-A-2 848 247 bekannt geworden. Es handelt sich vorzugsweise um ein sogenanntes Flurförderzeug. Bei letzterem legt man Wert auf einen kleinen Wendekreis. Vielfach ist ein Wenden auf der Stelle erforderlich. Aus diesem Grunde ist es bei Flurförderzeugen nicht selten, daß sie einen Lenkeinschlag von mehr als 90° haben. Bei dem bekannten Fahrzeug ist ein starker Lenkeinschlag möglich und man erreicht ihn im Gegensatz zu anderen Fahrzeugen mit sehr einfachen Mitteln und verhältnismäßig geringem Aufwand. Der Lenkeinschlag des innen laufenden Rades ist stärker als der des außen laufenden, weil letzteres bezüglich des momentanen Drehpunkts einen größeren Radius aufweist als das innen laufende Rad. Auf diese Weise lassen sich enge Kurven sehr genau fahren und es ist, wie gesagt, auch das Wenden auf der Stelle möglich. Im letzteren Falle befindet sich der Drehpunkt des Fahrzeugs zwischen den nicht lenkbaren, also lediglich mitlaufenden Rädern. Zweckmäßigerweise befindet sich die nicht lenkbare Achse am hinteren Fahrzeugende, bezogen auf die normale Fahrtrichtung des Fahrzeugs.

Bei einem Lenkausschlag wandert die Drehachse des Ritzels entlang der gedachten vertikalen Verbindungsebene, und bei einem 45°-Lenkeinschlag liegt auch die geometrische Ritzelachse auf dieser Verbindungsebene. Bei jedem geringeren oder größeren Lenkeinschlag und auch bei Geradeausfahrt ist die geometrische Ritzelachse gegenüber dieser Ebene versetzt. Diese Wanderung des Ritzels erfordert ein gewisses Zahnspiel. Letzteres bewirkt bei Geradeausfahrt eine gewisse Instabilität der Lenkung.

Die Aufgabe der Erfindung besteht infolgedessen darin, das Fahrzeug der eingangs genannten Art so zu verbessern, daß eine stabilere Geradführung gewährleistet ist.

Zur Lösung dieser Aufgabe wird erfindungsgemäß vorgeschlagen, daß das Fahrzeug gemäß dem Oberbegriff des Anspruchs 1, entsprechend dem kennzeichnenden Teil dieses Anspruchs ausgebildet ist. Aufgrund dieser Verschiebbarkeit der Schwinge in ihrer bei Geradeausfahrt eingenommenen Längsrichtung, also in der Stellung des Ritzels, in welcher sein Mittelpunkt der vertikalen Verbindungsebene durch die beiden geometrischen Radachsen um die Exzentrizität versetzt ist, erreicht man in insbesondere automatisch einstellbarer Weise, daß immer mindestens ein Zahn der Zahnräder spielfrei mit dem Ritzel in Eingriff steht. Diese Ausschaltung des für die Wanderung des Ritzels beim Lenken notwendigen Spiels während der Geradeausfahrt bewirkt in der angestrebten Weise die stabile Geradführung der lenkbaren Räder. Das Maß, um welches die Schwinge in Geradeausrichtung verstellt werden kann ist, wie gesagt, wesentlich kleiner als die Exzentrizität der Ritzelanlenkung. Wenn jedes Zahnrad mit einem Lenkantriebsritzel in Eingriff steht, so sind zweckmäßigerweise beide Lenkantriebsritzel gleichzeitig und gleichsinnig antreibbar. Außerdem empfiehlt es sich, die beiden Zahnräder mit etwa gleichem Drehmoment anzutreiben.

In Weiterbildung der Erfindung wird vorgeschlagen, daß das Ritzel aus zwei Teilritzeln besteht, die in Ritzel-Drehrichtung federelastisch um einen vorgegebenen Winkel gegeneinander versetzt bzw. versetzbar sind. Ein derartiges Ritzel ist beispielsweise durch das DE-U-75 15 665 bekannt. Der Einbau in das erfindungsgemäße Fahrzeug ist sehr vorteilhaft und erschließt einem derartigen Ritzel einen neuen Anwendungsbereich. In ihrer gegeneinander versetzten Lage bewirken die Zähen der beiden Teilritzel gewissermaßen eine Verengung der Zahnlücke zum Eingriff des dieser Lücke jeweils zugeordneten Zahns des Zahnrads. Aufgrund der Elastizität des Zahnversatzes ist ein einwandfreier Zahneingriff zwischen Zahnrad und Ritzel möglich, jedoch wird in der angestrebten Weise das unerwünschte Zahnspiel ausgeschaltet.

In weiterer Ausgestaltung der Erfindung wird vorgeschlagen, daß zwischen die beiden Teilritzel des Ritzels wenigstens eine Drehfeder od. dgl. geschaltet ist, wobei die Drehfeder im Sinne einer Vergrößerung des Zahnversatzes wirkt. Wenn die Zähne des Zahnrads zwischen die gegeneinander versetzten Zähne der beiden Teilritzel eingreifen, so bewirkt dieser Eingriff ein federelastisches Zurückdrehen der beiden Teilritzel in Richtung einer deckungsgleichen Anordnung und zwar gegen den Widerstand der Drehfeder oder Drehfedern. Auch dies trägt zu einem sicheren Geradeauslauf der lenkbaren Räder bzw. des gesamten Fahrzeugs bei und vermeidet das nicht nur lästige, sondern auch gefährliche Flattern der lenkbaren Räder.

Die Erfindung wird nachstehend anhand der Zeichnung näher erläutert.

Die Zeichnung zeigt schematisch ein Ausführungsbeispiel der Erfindung. Hierbei stellen dar :

Figur 1 Eine Unteransicht des Fahrzeugs mit eingeschlagenen lenkbaren Rädern,

Figur 2 in vergrößerter Darstellung einen Ausschnitt aus Fig. 1 um 90° gedreht, wobei die Geradeausstellung der Räder mit festen Linien eingezeichnet ist,

Figur 3 eine Seitenansicht eines Ausschnitts aus dem Ritzel,

Figur 4 einen Schnitt gemäß der Linie IV-IV der Fig.

Das Fahrzeug 1 besitzt zwei lenkbare Räder 2 und 3, die bei Vorwärtsfahrt in Geradeausrichtung 4 vorzugsweise die Vorderräder des Fahrzeugs bilden. Außerdem sind zwei nicht lenkbare mitlaufende Räder 5 und 6 vorhanden, die im genannten Falle Hinterräder sind. In nicht näher gezeigter Weise sind zumindest die lenkbaren Räder je in einem Lagerbock gelagert, der fest mit einem Zahnrad 7 bzw. 8 verbunden ist. Demnach stehen also die Lagerachsen der Zahnräder senkrecht zu den Lagerachsen der lenkbaren Räder. Außerdem bildet die geometrische Achse jedes Zahnrads die Drehachse der Lagerbocks od. dgl. Ihr Abstand 9 stellt zugleich die Spurweite der lenkbaren Räder des Fahrzeugs dar, die beim Ausführungsbeispiel kleiner ist als die Spurweite der nicht lenkbaren hinteren Räder 5 und 6. Der Achsabstand ist mit 10 bezeichnet.

Beim gegebenen Achsabstand 10 sind die Durchmesser der Zahnräder 7 und 8 so gewählt, daß ein Zwischenraum für ein mit beiden in Eingriff stehendes Ritzel 11 mit etwa halber Zähnezahl entsteht. Es ist um eine vertikale Achse 12 exzentrisch an einer Schwinge 13 gelagert. Das ritzelferne Ende dieser Schwinge ist um die andere vertikale Achse 14 schwenkbar am Fahrzeug angelenkt. Die Anlenkung ist um einen geringen Betrag 15 einstellbar. Dieser Betrag ist in Übereinstimmung mit der zeichnerischen Darstellung wesentlich kleiner als der Betrag der Exzentrizität bzw. den Abstand 16, um welchen die Anlenkachse 12 der Schwinge 13 gegenüber dem Mittelpunkt 17 des Ritzels 11 versetzt ist.

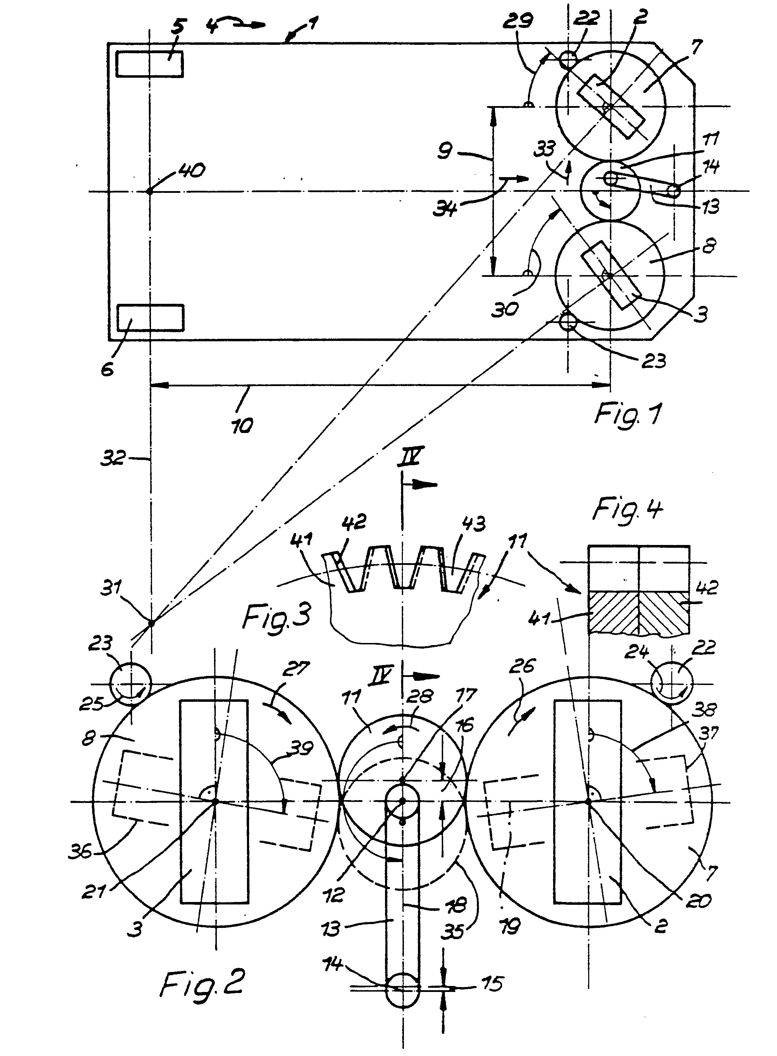

Bei Geradeausstellung der Räder (feste Linien der Figur 2) verläuft die Längsachse 18 der Schwinge 13 senkrecht zu einer gedachten vertikalen, sich senkrecht zur Bildebene erstreckenden Verbindungsebene 19 durch die Vertikalachsen 20, 21 der Zahnräder 7, 8 und die Achsen der lenkbaren Räder 2, 3. Dabei liegt dann auch die Achsen 12 in dieser vertikalen Verbindungsebene 19. Gegenüber letzterer eilt die andere vertikale Achse 14 der Schwinge 13 voraus, während der Mittelpunkt 17 des Ritzels 11 bei Vorwärtsfahrt nacheilt. Jedes der beiden Zahnräder 7 und 8 ist mit Hilfe eines Lenkantriebsritzels 22 bzw. 23 drehbar, die mit einem Lenkantriebsmotor in Antriebsverbindung stehen und sich dabei jeweils in gleichem Drehsinne, beispielsweise in Richtung des Pfeils 24 bzw. 25, drehen. Außerdem wird von jedem Lenkantriebsritzel etwa das gleiche Drehmoment auf sein zugeordnetes Zahnrad 7 bzw. 8 übertragen. Diese Maßnahme dient der guten Geradeausfahrt ebenso wie die einstellbare Lagerung des ritzelfernen Endes der Schwinge 13. Wenn man über den Lenkantriebsmotor und die Lenkantriebsritzel 22 und 23 die beiden Zahnräder 7 und 8 in Pfeilrichtung 26 bzw. 27 dreht, so hat dies einerseits ein Drehen des Ritzels 11 im Sinne des Pfeils 28 und andererseits auch einen Lenkeinschlag der lenkbaren Räder 2 und 3 zur Folge. Dabei sind die Verhältnisse bei den gegebenen geometrischen Größen und Zähnezahlen so, daß einer 90°-Drehung des Ritzels 11 ein Lenkeinschlag 29 bzw. 30 der lenkbaren Räder 2 und 3 um etwa 45° zugeordnet ist. Aufgrund der Kupplung der beiden Zahnräder 7 und 8 über das exzentrisch an der Schwinge 13 gelagerte Ritzel 11 ist jedoch der Lenkeinschlag 30 des innen laufenden lenkbaren Rades 8 etwas größer als derjenige 29 des außen laufenden lenkbaren Rades 2. Ihre Schrägstellung ist dabei so, daß sich die Verlängerungen der geometrischen Drehachsen der lenkbaren Räder 2 und 3 im Punkt 31 treffen, welcher den momentanen Drehpunkt des Fahrzeugs 1 bildet und der auf einer gedachten Verlängerung 32 der Lagerachse oder Achsen der nicht lenkbaren Räder 5 und 6 liegt. Bei dieser 90°-Drehung des Ritzels 11 wandert die Achse 12 entlang der vertikalen Verbindungsebene 19 im Sinne des Pfeils 33 (Fig. 1), während das Ritzel selbst eine Vorwärtsbewegung in Pfeilrichtung 34 vornimmt. Es befindet sich beispielsweise bei diesem 45°-Lenkeinschlag der lenkbaren Räder 2 und 3 genau zwischen den beiden Zahnrädern, d. h. der Ritzelmittelpunkt 17 liegt nunmehr auch in der vertikalen Verbindungsebene 19.

Nach einer 180°-Drehung des Ritzels 11 nimmt es gegenüber den Zahnräder 7 und 8 die in Fig. 2 mit einer gestrichelten Linie 35 eingezeichnete Lage ein. Dabei hat sich dann der Ritzelmittelpunkt 17 um die doppelte Exzentrität in Vorwärtsfahrtrichtung bewegt. Die lenkbaren Räder nehmen nunmehr die aus Fig. 2 ersichtliche, mit gestrichelten Linien 36 bzw. 37 eingezeichnete Lage ein. Sie ist der Deutlichkeit halber übertrieben dargestellt. Man erkennt jedoch, daß nunmehr der Lenkeinschlag 38 etwas geringer ist als 90°, während der Lenkeinschlag 39 des anderen lenkbaren Rades 3 den Winkel von 90° übertrifft. Das Fahrzeug 1 kann sich dabei um den Punkt 40 drehen, d. h. auf der Stelle wenden. Dies ist insbesondere ein bei Flurförderzeugen wünschenswerter Lenkeinschlag der Räder.

Die geometrischen Verhältnisse und das Zahnspiel sind so zu wählen, daß das Ritzel 11 die erwähnte Translationsbewegung in Pfeilrichtung 34 durchführen kann, wobei zu beachten ist, daß der der Spurweite 9 entsprechende Achsabstand der beiden Zahnräder 7 und 8 konstant bleibt. Hieraus folgt, daß bei Geradeausfahrt aufgrund der exzentrischen, in Fig. 2 mit einer festen Linie dargestellten Stellung des Ritzels 11 wegen des notwendigen Zahnspiels ein unruhiger Lauf der lenkbaren Räder 2 und 3 stattfinden kann. Dem wird einerseits durch die sich insbesondere selbsteinstellende Lagerung der Schwinge 13 an ihrer vertikalen Achse 14 und andererseits durch die besondere Ausbildung des Ritzels 11 erfolgreich entgegengewirkt. Letzteres besteht aus den beiden Teilritzeln 41 und 42 gleicher Abmessungen, die in nicht dargestellter Weise im Sinne einer Aufspreizung und damit Verengung der Zahnlücken 43 federelastisch aneinander abgestützt sind. Hierzu dienen nicht dargestellte Drehfedern od. dgl. Der Eingriff zwischen diesem Ritzel und den Zahnrädern erfolgt demnach so, daß das Ritzel auch bei von seiner « Mittelstellung » gemäß Fig. 1 abweichenden Verschiebelage gegenüber der Verbindungsebene 19 spielfrei mit mindestens einem Zahn der Zahnräder in Eingriff steht. Auch diese Maßnahme trägt zu einem flatterfreien Lauf der lenkbaren Räder 2 und 3 bei.

## Patentansprüche

1. Fahrzeug mit einer nicht lenkbaren Achse sowie zwei symmetrisch zur Fahrzeug-Längsachse angeordneten, in einem Lagerbock od. dgl. gelagerten lenkbaren Rädern, denen je ein um eine vertikale Achse (20, 21), deren gedachte Verlängerung sich durch die Radmitte erstreckt, drehbares, mit dem zugeordneten Lagerbock verbundenes Zahnrad (7, 8) zugeordnet ist, wobei sich zwischen den beiden Zahnrädern (7, 8) ein außermittig an einer Schwinge (13) um eine vertikale Achse (12) gelagertes, mit beiden Zahnrädern in Eingriff stehendes Ritzel (11) befindet und sich die Längsachse (18) der um eine andere vertikale Achse (14) drehbaren Schwinge (13) bei Geradeausstellung der lenkbaren Räder (2, 3) in Geradeausrichtung (4) erstreckt, wobei auch der Ritzelmittelpunkt (17) auf dieser Längsachse (18) oder einer gedachten Verlängerung davon liegt, während die Drehachse (12) des Ritzels (11) an der Schwinge (13) in einer gedachten vertikalen Verbindungsebene (19) durch die beiden geometrischen Radachsen gelegen ist, wobei außerdem mindestens eines der Zahnräder (7, 8) mit einem Lenkantriebselement (22, 23), insbesondere einem Lenkantriebsritzel, in Antriebsverbindung steht, dadurch gekennzeichnet, daß die andere vertikale Achse (14) der Schwinge (13) um einen gegenüber dem Abstand (16) zwischen dem Ritzelmittelpunkt (17) und der Drehachse (12) des Ritzels (11) geringen Betrag (15) in Geradeausfahrtrichtung (4) verstellbar ist.

2. Fahrzeug nach Anspruch 1, dadurch gekennzeichnet, daß das Ritzel (11) aus zwei Teilritzeln (41, 42) besteht, die in Ritzel-Drehrichtung federelastisch um einen vorgegebenen Winkel gegeneinander versetzt bzw. versetzbar sind.

3. Fahrzeug nach Anspruch 2, dadurch gekennzeichnet, daß zwischen die beiden Teilritzel (41, 42) des Ritzels (11) wenigstens eine Drehfeder od. dgl. geschaltet ist, wobei die Drehfeder im Sinne einer Vergrößerung des Zahnversatzes wirkt.

## Claims

1. Vehicle having a non-steerable axle and also, disposed symmetrically of the longitudinal axis of the vehicle and mounted in a bearing block or the like, two steerable wheels, with each of which there is associated a gearwheel (7, 8) rotatable about a vertical axis (20, 21) and connected to the associated bearing block, the imaginary extension of the said vertical axies (20, 21) extending through the centre of the wheel, there being between the two gearwheels (7, 8) and mounted eccentrically on a swinging arm (13) about a vertical axis (12) a pinion (11) engaging both gearwheels, the longitudinal axis (18) of the swinging arm (13) which is rotatable about another vertical axis (14) extending in the straight-ahead direction (4) when the steerable wheels (2, 3) are in the straight-ahead position, also the centre point (17) of the pinion lying on this longitudinal axis or on an imaginary extension thereof, while the axis of rotation (12) of the pinion (11) on the swinging arm (13) lies in an imaginary vertical connecting plane (19) through the two geometrical wheel axes, at least one of the gearwheels (7, 8) furthermore being in driving connection with a steering drive element (22, 23), in particular a steering drive pinion, characterised in that the other vertical axis (14) of the swinging arm (13) is adjustable in the straight-ahead direction of travel (4) by an amount (15) which is small in comparison with the distance (16) between the centre point (17) of the pinion and the axis of rotation (12) of the pinion (11).

2. Vehicle according to Claim 1, characterised in that the pinion (11) consists of two partial pinions (41, 42) which, in the direction of rotation of the pinion, are or can be offset by a predetermined angle in respect of each other in springingly elastic fashion.

3. Vehicle according to Claim 2, characterised in that between the two partial pinions (41, 42) of the pinion (11) there is incorporated at least one torsion spring or the like, the torsion spring acting in the sense of increasing the tooth offset.

## Revendications

1. Véhicule avec un essieu non orientable ainsi qu'avec deux roues orientables disposées symétriquement par rapport à l'axe longitudinal du véhicule, montées dans un chevalet de palier ou analogue, auxquelles est associée chaque fois une roue dentée (7, 8) liée au chevalet de palier associé, capable de tourner autour d'un axe vertical (20, 21) dont le prolongement imaginé passe par le centre de la roue ; où, entre les deux roues dentées (7, 8) se trouve un pignon (11) monté de façon excentrée sur une bielle oscillante (13) autour d'un axe vertical (12) et étant en prise avec les deux roues dentées ; et où l'axe longitudinal (18) de la bielle oscillante (13) pouvant tourner autour d'un autre axe vertical (14), s'étend dans la direction rectiligne (4) lors du positionnement en ligne droite des roues orientables (2, 3) ; où, aussi, le point central (17) du pignon se trouve sur cet axe longitudinal (18) ou sur un prolongement imaginé de celui-ci, tandis que l'axe de rotation (12) du pignon (11) sur la bielle oscillante (13) est placé dans un plan de liaison vertical imaginé (19) passant par les deux axes géométriques des roues ; où, par ailleurs, au moins une des roues dentées (7, 8) est en liaison d'entraînement avec un élément d'entraînement en direction (22, 23), en particulier un pignon d'entraînement en direction, caractérisé en ce que l'autre axe vertical (14) de la bielle oscillante (13) est déplaçable dans le sens de la marche en ligne droite (4) d'une petite grandeur (15) par rapport à la distance (16) entre le point central (17) du pignon et l'axe de rotation (12) du pignon (11).

2. Véhicule suivant la revendication 1, caractérisé en ce que le pignon (11) est constitué de deux pignons partiels (41, 42) qui sont décalés, respectivement décalables, l'un par rapport à l'autre, élastiquement, d'un angle fixé à l'avance, dans le sens de rotation du pignon.

3. Véhicule suivant la revendication 2, caractérisé en ce qu'entre les deux pignons partiels (41, 42) du pignon (11) est monté au moins un ressort de torsion ou analogue, le ressort de torsion agissant dans le sens d'un agrandissement du décalage des dents.

# 0 097 278

Fig. 1

Fig. 4

Fig. 3

Fig. 2